# EUROPEAN PATENT APPLICATION

(11) **EP 2 520 973 A1**
(43) Date of publication of application: **07.11.2012**
(21) Application number: 12166526.9
(22) Date of filing: 03.05.2012
(51) Int. Cl.: G02F 1/1339

(54) **Color filter substrate and producing process and device for manufacturing the same**

(30) Priority: 03.05.2011 CN 201110113188
(71) Applicant: Boe Technology Group Co. Ltd., Beijing 100015 (CN); Beijing BOE Display Technology Co., Ltd., Beijing 100176 (CN)
(72) Inventor: Wu, Hongjiang, 100176 Beijing (CN); Li, Min, 100176 Beijing (CN); Wang, Dong, 100176 Beijing (CN); Wang, Song, 100176 Beijing (CN); Rim, Seungmoo, 100176 Beijing (CN)
(74) Representative: Brötz, Helmut

(57) **Abstract**

The embodiments of the disclosed technology disclose a color filter substrate and the producing process and device for the same. The producing process of the color filter substrate according to the embodiments of the disclosed technology comprises: forming a transparent conductive layer on a side of a base substrate; forming a black matrix on the other side of the base substrate; forming a color filer layer within the black matrix; and forming an insulated material layer comprising both post spacers and a protection film formed integrally on the color filer layer.

## Description

### TECHNINAL FIELD

Embodiments of the disclosed technology relate to a liquid crystal display (LCD), in particular, to a color filter substrate and a producing process and device for manufacturing the same.

### BACKGROUND

With the advance of display technologies, high transmission rate, large dimensions, low power consumption, and low costs become the development trends of the future LCDs.

Thin-film-transistor liquid crystal displays (TFT-LCDs) have become the mainstream of the current commercially available LCDs for various advantages including smaller volumes, light weight, lower power consumption and little radiation, and take a dominant role in the flat display market. A TFT-LCD is manufactured by filling liquid crystal materials between an array substrate and a color filter substrate after the array substrate and the color filter substrate is assembled to face each other. By way of example, the array substrate comprises thin-film transistors and pixel electrodes; and the color filter substrate comprises color filers and a black matrix (BM). The black matrix disposed on the color filter substrate can separate the color filers of the adjacent sub-pixels from each other, preventing color mixing, and can also block external lights from irradiating on the channel areas of the TFTs on the array substrate, preventing leakage currents in a dark state as well as light leakage in the pixel areas.

Likewise, a color filter substrate is a key component of an LCD of Advanced-Super Dimensional Switching (AD-SDS) mode. An AD-SDS LCD forms a multi-dimensional electric field with parallel electric fields formed by perimeters of pixel electrodes within a same level and longitudinal electric fields formed by pixel electrodes and common electrodes that are located on different levels, causing all liquid crystal molecules between and on top of the pixel electrodes within the LCD panel to rotate, thereby increasing the efficiency of the liquid crystal materials and improving the transmission rate. The AD-SDS technology is capable of improving picture quality, and has various advantages including high transmission rate, wide view angle, high aperture ratio, low chromatic aberrance, short response time, no push mura, etc.

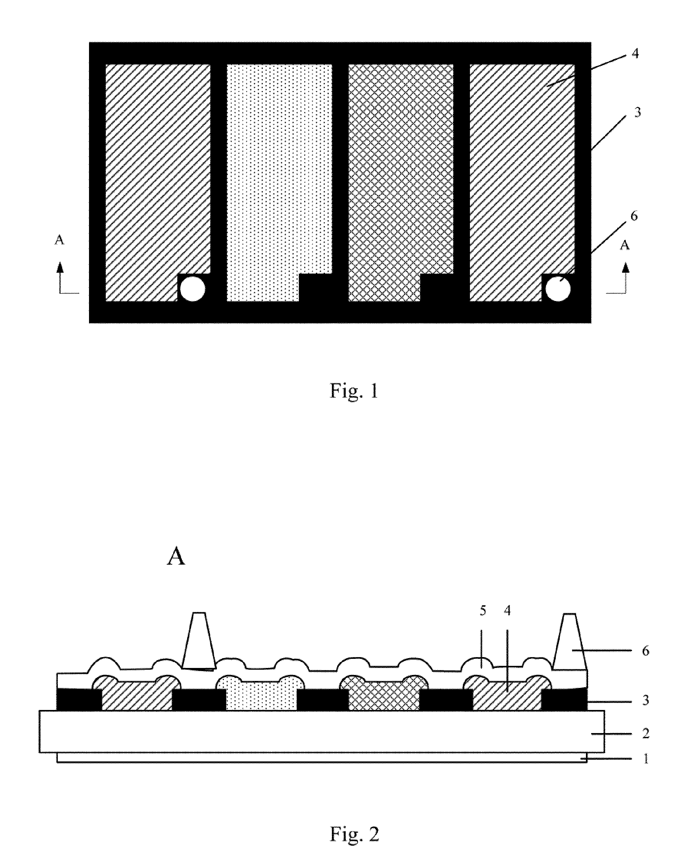

A structural schematic view of a color filter substrate in a conventional technology is shown in Fig.1, and a cross-sectional view of the color filter substrate taken along line A-A of Fig.1 is shown in Fig.2. As shown, the color filter substrate comprises a transparent conductive film 1, a glass substrate 2, a black matrix 3, a color filer layer 4, a protection layer 5 and a post spacer (PS) layer 6.

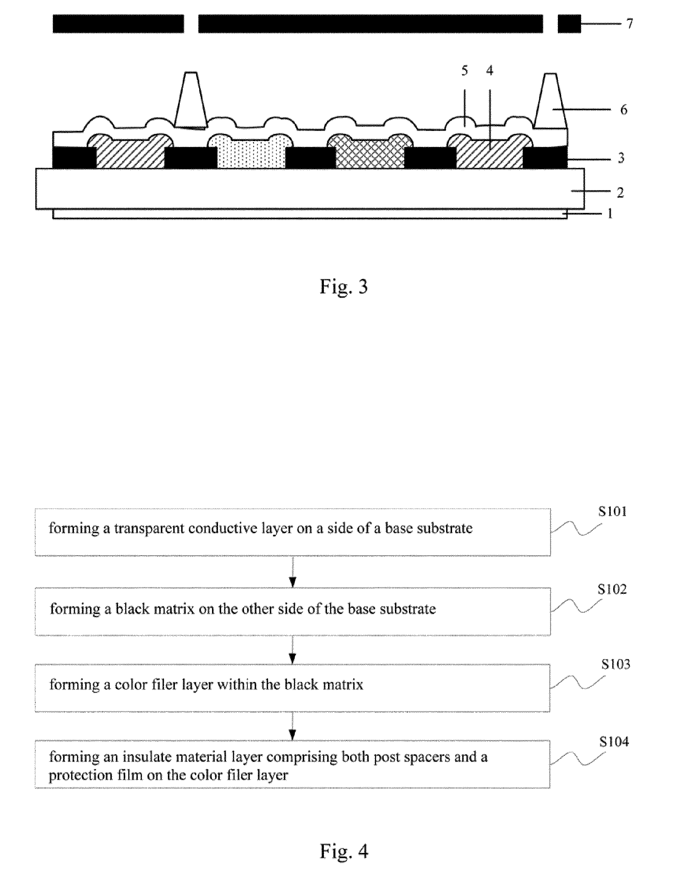

Referring to Fig.3, the producing process of the above AD-SDS color filer substrate comprises the following steps. First, a transparent conductive layer is coated on the rear side of a glass substrate 2; then, a black matrix 3 is formed on the surface of the glass substrate 2; subsequently, a color filer layer 4 is formed on the black matrix 3, then an overcoat (OC) protection layer 5 is applied on the color filer layer 4; and finally, a post spacer layer 6 is formed on the protection layer 5. The post spacer layer 6 is formed by a lithography process through a mask 7. The part of the mask 7 opposite to the protection layer 5 is non-transmissive, while the part of the mask 7 opposite to the post spacer layer 6 is fully transparent. The photoresist for forming the post spacer layer 6 is of a negative type.

In the above mentioned process, the overcoat protection layer and the post spacers are formed by two separate steps. As such, the producing process of the color filter substrate can not form the overcoat protection layer and the post spacers simultaneously; accordingly, the producing process is rather complicated with a long fabrication cycle. Furthermore, the producing process requires photoresist for forming the protection film, resulting in a relative large investment and an increased risk.

### SUMMARY

The described embodiments of the disclosed technology provides a color filter substrate and a producing process and device thereof, for shortening the producing process of the color filter substrate, thereby decreasing investment on equipments and improving efficiency.

According to an embodiment of the disclosed technology, a producing process of the color filter substrate comprises: forming a transparent conductive layer on a side of a base substrate; forming a black matrix on the other side of the base substrate; forming a color filer layer within the black matrix; and forming an insulated material layer comprising both post spacers and an overcoat protection film formed integrally on the color filer layer.

According to another embodiment of the disclosed technology, a fabrication device for a color filter substrate comprises: a transparent conductive layer forming unit for forming a transparent conductive layer on a side of a base substrate; a black matrix forming unit for forming a black matrix on the other side of the base substrate; a color filer forming unit for forming a color filer layer within the black matrix; and an insulated material layer forming unit for forming an insulated material layer comprising both post spacers and an overcoat film formed integrally.

According to further another embodiment of the disclosed technology, a color filer substrate comprises: a base substrate, a transparent conductive layer, black matrix, a color filer layer and an insulated material layer comprising a post spacer layer and a overcoat protection layer formed integrally; wherein the transparent conductive layer and the black matrix are on opposite sides of the base substrates, the color filer layer is within the black matrix, and the insulated material layer is on the color filer layer and the black matrix.

According to further another embodiment of the disclosed technology, an LCD panel comprises: a color filter substrate, an array substrate and a liquid crystal layer filled between the color filter substrate and the array substrate, wherein the color filter substrate is of the type as mentioned above.

According to further another embodiment of the disclosed technology, the display device comprises the above mentioned LCD panel.

In the embodiments of the disclosed technology, a transparent conductive layer is formed on a side of a base substrate; a black matrix is formed on the other side of the base substrate; a color filer layer is formed within the black matrix; an insulated material layer comprising both post spacers and a protection film is formed on the color filer layer; the producing process of the color filter substrate is shortened by forming the post spacers and the overcoat protection film simultaneously, thereby reducing the investment on equipments and improving the efficiency.

Further scope of applicability of the disclosed technology will become apparent from the detailed description given hereinafter. However, it should be understood that the detailed description and specific examples, while indicating preferred embodiments of the disclosed technology, are given by way of illustration only, since various changes and modifications within the spirit and scope of the disclosed technology will become apparent to those skilled in the art from the following detailed description.

### BRIEF DESCRIPTION OF THE DRAWINGS

The disclosed technology will become more fully understood from the detailed description given hereinafter and the accompanying drawings which are given by way of illustration only, and thus are not limitative of the disclosed technology and wherein:

Fig.1 is a schematic view of the structure of a color filter substrate in a conventional technology;

Fig.2 is a schematic cross-sectional view of the color filter substrate taken along line A-A of Fig. 1;

Fig.3 is a schematic view of the exposure producing process in the conventional technology;

Fig.4 is a schematic flowchart of the producing process of a color filter substrate according to an embodiment of the disclosed technology;

Fig.5 is a schematic view of the structure of the color filter substrate according to the embodiment of the disclosed technology;

Fig.6 is a schematic cross-sectional view of the color filter substrate taken along line B-B of Fig.5;

Fig.7 is a schematic view of the exposure producing process according to the embodiment of the disclosed technology; and

Fig.8 is a schematic view of the structure of the fabrication device of the color filter substrate according to an embodiment of the disclosed technology.

### DETAILED DESCRIPTION

The here described embodiments of the disclosed technology provide a color filter substrate and the producing process and device for manufacturing the color filter substrate, in order to shorten the producing process of the color filter substrate, thereby reducing the investments on the equipments and improving the efficiency to overcome the technical problems in the state of art.

The technical solutions according to the embodiments of the disclosed technology are explained in details below in conjunction with the figures.

Referring to Fig.4, the producing process of the color filter substrate according to an embodiment of the disclosed technology comprises the following steps:

S101, forming a transparent conductive layer on a side of a base substrate;

S102, forming a black matrix on the other side of the base substrate;

S103, forming a color filer layer within the black matrix; and

S104, forming an insulated material layer comprising both post spacers and a protection film on the color filer layer.

The transparent conductive layer may be made of ITO, IZO, and aluminum zinc oxide (AZO) or the like.

The base substrate may be a glass substrate, a quartz substrate, a plastic substrate or the like.

An insulated material layer comprising both post spacers and a protection film is formed on the color filer layer, the producing process comprises: forming the insulated material layer comprising both post spacers and a protection film by a partial exposure technology in one lithography processing.

In an example, the step during which the insulated material layer comprising both post spacers and a protection film is formed by a partial exposure technology in one lithography processing comprises: forming the insulated material layer comprising both post spacers and a protection film by lithography through a mask with a full exposure area and a partial exposure area. The full exposure area is for forming the post spacers (PSs), and the partial exposure area is for forming the overcoat (OC) protection film.

In an example, the post spacers and the overcoat protection film are made of an identical resin material. The resin material may be a photosensitive synthetic resin, comprising polymers, monomers and photoinitiators. For example, the polymers mainly comprise vinyl polymers (for example, methacrylate and acrylate); the monomers may be trimethylolpropane trisacrylate (TMPTA), tripropylene glycol diacrylate, or 1,6-Hexanediol diacrylate, by way of example; the photoinitiators mainly comprise acetone, hypnone or like.

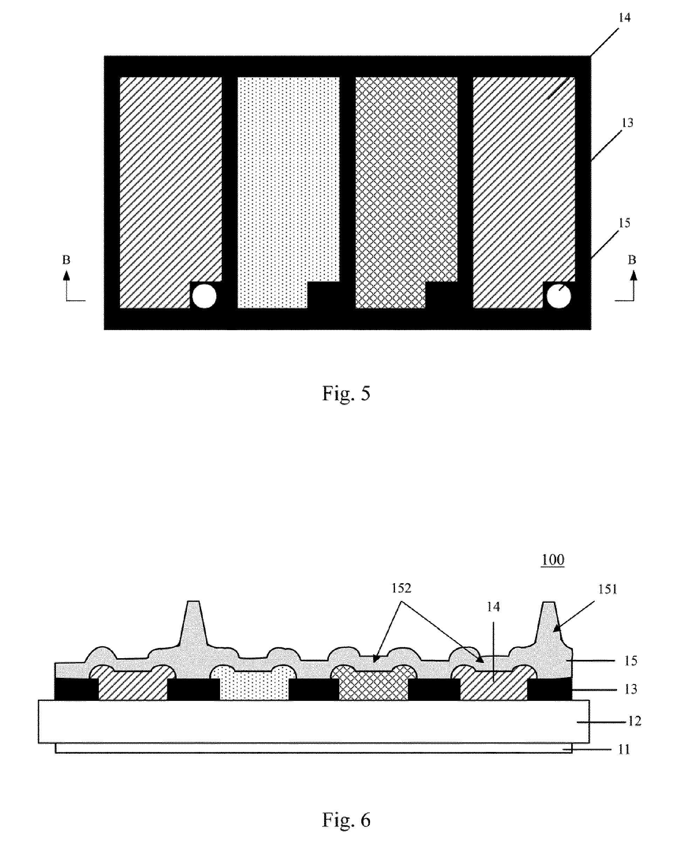

Referring to Fig. 5, a schematic view of the structure of the color filter substrate according to the embodiment of the disclosed technology is shown, and a schematic cross-sectional view of the color filter substrate taken along line B-B of Fig.5 is shown in Fig.6. As shown, the color filter substrate 100 according to the embodiment of the disclosed technology comprises: a glass substrate 12, a transparent conductive layer 11, a black matrix 13, a color filer layer 14, and an insulated material layer 15 comprising both post spacers 151 and a protection film 152. The post spacers 151 are located over to overlap with the black matrix 13, without affecting the display area.

The transparent conductive layer 11 and the black matrix 13 are disposed on the opposite sides of the glass substrate 12. The color filer layer 14 is provided within and partially on the black matrix 13, and the insulated material layer 15 lies on the color filer later 14, contacting both the color filer layer 14 and the black matrix 13.

For example, the color filer layer 14 comprises: red filter units, green filter units and blue filter units, respectively corresponding to respective sub-pixels of the display device that are defined by the black matrix. In another example, the color filer layer 14 may comprise: red filter units, green filter units, blue filter units and yellow filter units, corresponding to respective sub-pixels of the display device that are defined by the black matrix. The protection scope of the disclosed technology is not limited by the construction way of the color filer layer 14. These filter units in different colors are disposed within the black matrix for display.

The insulated material layer 15 is made of a same material integrally, which may be a resin material. The insulated material layer 15 comprises a portion forming the post spacers 151 and a portion forming the overcoat protection film 152 other than the post spacers 151. The post spacers 151 act as supports between the color filter substrate and the array substrate, while the overcoat protection film covers the color filer layer 14 for protecting it. As such, the insulated material layer 15 acts as both the protection film and the post spacers in the state of art. In this example, the post spacers and the overcoat protection film are formed integrally.

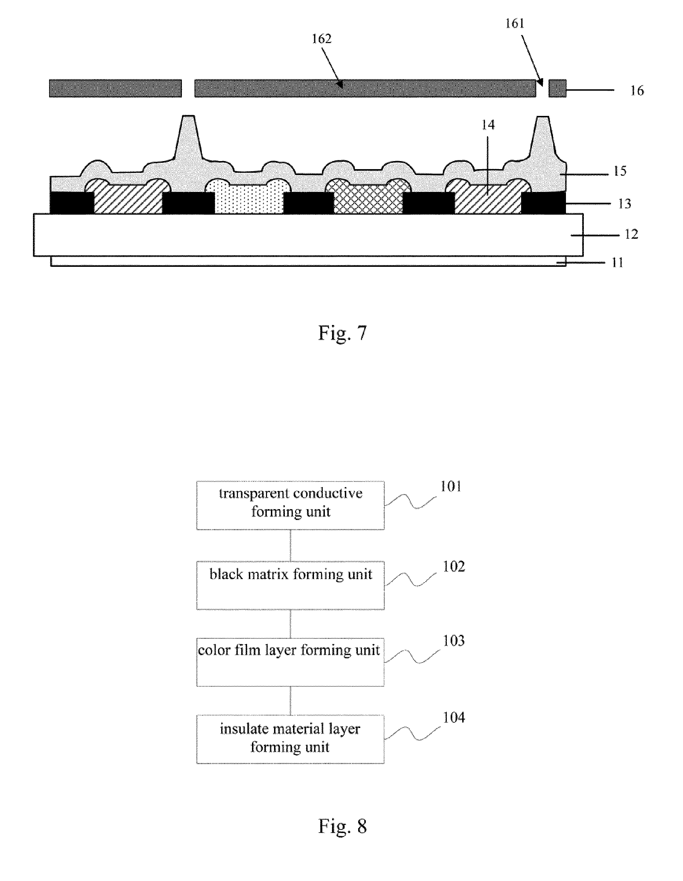

Referring to Fig.7, the embodiment of the disclosed technology is explained in conjunction with the color filter substrate for an AD-SDS mode LCD display. A half tone mask (HTM) or a gray tone mask (GTM) is used to expose and develop the photosensitive resin layer for forming the insulated material layer 15 through a mask 16 comprising a full exposure area 161 and a partial exposure area 162; thereafter, the portion corresponding to the full exposure area 161 of the mask 16 forms the post spacers, while the portion corresponding to the partial exposure area 162 forms the protection film 152. Thus the fabrication processing of the color filter substrates is shortened, the equipment investment can be reduced and the efficiency can be improved accordingly. In particular, the flow of the partial exposure comprises: first a layer of resin material is applied on the color filer layer 14, then a mask 16 comprising a full exposure area 161 and a partial exposure area 162 is placed to expose the resin material, in which process a corresponding portion of the resin material is fully exposed through the full exposure area of the mask 16 to form the post spacers, and a corresponding portion of the resin is partially exposed through the partial exposure area of the mask 16 to form the overcoat protection film. In this example, the resin material used is of a negative photosensitive type; namely, the exposed portion remains during development, while the unexposed portion is removed in development; correspondingly, the partially exposed portion is partially removed in the processing, with a resin layer of a reduced thickness.

As used herein, the full exposure area is the area of the mask 16 with a transmission rate close to 100%. And the partial exposure area is the area of the mask 16 with a transmission rate less than 100%, for example 50%.

In another example, the resin material used for forming the insulated material layer is of a positive photosensitive type; namely, the exposed portion is removed in development, while the unexposed portion remains in development; the partially exposed portion is partially removed in the developing processing, with a resin layer of a reduced thickness; correspondingly, during the exposure, the area of the mask for forming the post spacers is an non-exposure area (i.e., an opaque area), while the area for forming the overcoat protection film is a partial exposure area that is partially transmissible for light.

An LCD panel is also provided according to an embodiment of the disclosed technology, which comprises a color filter substrate, an array substrate, and a liquid crystal layer filled between the color filter substrate and the array substrate. The LCD panel further comprises a backlight module disposed behind the LCD panel, which may be of a direct type or an edge-emitting type.

A display device according to an embodiment of the disclosed technology comprises the above-mentioned LCD panel, which is discussed in conjunction with the above embodiments.

Referring to Fix.8, a fabrication device for the color filter substrate is also provided according to an embodiment of the disclosed technology, comprising:

a transparent conductive forming unit 101 for forming a transparent conductive layer on a side of a base substrate;

a black matrix forming unit 102 for forming a black matrix on the other side of the base substrate;

a color filter layer forming unit 103 for forming a color film within the black matrix; and

an insulated material layer forming unit 104 for forming an insulated material layer comprising both post spacers and a protection film.

By way of example, the insulated material layer forming unit 104 may comprise at least three parts: a coating device to coat a raw material on the color filer layer, an exposure device and a developing device.

By way of example, the insulated material layer forming unit 104 forms the insulated material layer comprising both the post spacers and the protection film on the color filer layer through the full exposure area and the partial exposure area of a mask. The full exposure area is for forming the post spacers while the partial exposure area is for forming the overcoat protection film.

By way of example, the insulated material layer forming unit 104 forms the post spacers and the overcoat protection film integrally from a same material.

According to the embodiments of the disclosed technology, a transparent conductive layer is formed on a side of a base substrate; a black matrix is formed on the other side of the base substrate; an insulated material layer comprising both the post spacers and the protection film is formed on the color filer layer. The fabrication processing of the color filter substrates can be shortened, thereby decreasing investment on equipments and improving the efficiency.

Obviously, those skilled in the art may recognize any variation and modification of the disclosed technology without departing the scope and spirit thereof. As such, the disclosed technology intends to include the variations and modifications should they be within the scope as set forth in the appended claims and equivalents. The embodiments should not be construed as limiting or constraining the scope of the disclosed technology as set forth in the appended claims.

## Claims

1. A fabrication process of a color filter substrate, comprising:
forming a transparent conductive layer on a side of a base substrate;
forming a black matrix on the other side of the base substrate;
forming a color filer layer within the black matrix; and
forming an insulated material layer comprising both post spacers and an overcoat protection film formed integrally on the color filer layer.

2. The fabrication processing according to claim 1,wherein forming an insulated material layer comprising both post spacers and an overcoat film formed integrally on the color filer layer comprises:
forming an insulated material layer comprising both post spacers and an overcoat film by a partial exposure technology processing.

3. The fabrication processing according to claim 2, wherein forming an insulated material layer comprising both post spacers and an overcoat film by a partial exposure technology processing comprises:
forming an insulated material layer comprising both post spacers and the overcoat film through a mask comprising a full exposure area and a partial exposure area, wherein the full exposure area is for forming the post spacers and the partial exposure area is for forming the overcoat protection film.

4. The fabrication processing according to claim 2, wherein forming an insulated material layer comprising both post spacers and an overcoat film by a partial exposure technology processing comprises:
form an insulated material layer comprising both post spacers and the overcoat film through a mask comprising a non-exposure area and a partial exposure area, wherein the partial exposure area is for forming the post spacers and the non-exposure area is for forming the overcoat protection film.

5. The fabrication processing according to claim 3 or 4, wherein the insulated material layer is formed of a photosensitive resin material.

6. The fabrication processing according to claim 5, wherein the photosensitive resin material comprises: polymers, monomers, and photoinitiators.

7. A manufacturing device for a color filter substrate, comprising:
a transparent conductive layer forming unit for forming a transparent conductive layer on a side of a base substrate;
a black matrix forming unit for forming a black matrix on the other side of the base substrate;
a color filer forming unit for forming a color filer layer within the black matrix; and
an insulated material layer forming unit for forming an insulated material layer comprising both post spacers and an overcoat film formed integrally.

8. The manufacturing device according to claim 7, wherein the insulated material layer forming unit forms an insulated material layer comprising both post spacers and an overcoat film by a partial exposure technology processing.

9. The manufacturing device according to claim 7, wherein the insulated material layer forming unit forms an insulated material layer comprising both post spacers and an overcoat protection film with a mask comprising a full exposure area and a partial exposure area, wherein the full exposure area is for forming the post spacers and the partial exposure area is for forming the overcoat protection film.

10. The manufacturing device according to claim 8, wherein the insulated material layer forming unit forms an insulated material layer comprising both post spacers and an overcoat protection film with a mask comprising a non-exposure area and a partial exposure area, wherein the non-exposure area is for forming the post spacers and the partial exposure area is for forming the overcoat protection film.

11. The manufacturing device according to claim 9 or 10,wherein the insulated material layer forming unit forms the insulated material layer with a photosensitive resin material.

12. A color filter substrate, comprising:
a base substrate,
a transparent conductive layer,
black matrix,
a color filer layer, and
an insulated material layer comprising both post spacers and an overcoat protection film ;
wherein the transparent conductive layer and the black matrix are on opposite sides of the base substrates, the color filer layer is within the black matrix, and the insulated material layer is on the color filer layer and the black matrix.

13. The color filter substrate according to claim 12, wherein the insulated material layer is made of a photosensitive resin material.

14. A liquid crystal display (LCD) panel, comprising:
a color filter substrate,
an array substrate, and
a liquid crystal layer filled between the color filter substrate and the array substrate, wherein the color filter substrate is that in accordance with claim 13.

15. The display device, comprising an LCD panel according to claim 14.
